# EUROPEAN PATENT SPECIFICATION

(11) **EP 3 168 680 B1**
(45) Date of publication and mention of the grant of the patent: **03.10.2018**
(21) Application number: 15194726.4
(22) Date of filing: 16.11.2015
(51) Int. Cl.: G02F 1/29, C09K 19/56

(54) **ALIGNMENT MATERIAL FOR LIQUID CRYSTAL LENS AND LIQUID CRYSTAL LENS SYSTEM**
AUSRICHTUNGSMATERIAL FÜR FLÜSSIGKRISTALLLINSE UND FLÜSSIGKRISTALLLINSENSYSTEM
MATÉRIAU D'ALIGNEMENT DE LENTILLE À CRISTAUX LIQUIDES ET SYSTÈME DE LENTILLE À CRISTAUX LIQUIDES

(43) Date of publication of application: 17.05.2017
(73) Proprietor: King Abdulaziz City for Science and Technology, 11442 Riyadh (SA)
(72) Inventor: AL-SAUD, Turki Saud Mohammed, 11442 Riyadh (SA); ALTAMIMI, Rashid Mohammed, 11442 Riyadh (SA); AGABEKOV, Vladimir Enokovich, 220141 Minsk (BY); MURAVSKY, Alexander Anatolievich, 220141 Minsk (BY); MURAUSKI, Anatoli Alexandrovich, 220141 Minsk (BY); BIAZRUCHANKA, Veranika Sergeevna, 220141 Minsk (BY)
(74) Representative: Gulde & Partner

(56) References cited:
- US-A1- 2015 077 663
- US-A1- 2015 119 522

## Description

### FIELD OF TECHNOLOGY

This disclosure relates generally to electrically tunable liquid crystal (LC) lens. More specifically, this disclosure relates to an alignment material capable of generating pretilt angles upon exposure to light. Also, this disclosure relates to LC lenses and LC lens systems comprising such alignment material. Moreover, this disclosure relate to a method for making such LC lenses and LC lens systems.

### BACKGROUND

Typically, a regular LC lens is polarization-dependent. In order to obtain a polarization-independent LC lens system, two or more LC lenses or sub-lenses are stacked together and mutual orthogonal orientation is attempted. Each sub-lens is manufactured separately and special precise mechanics are required in order to achieve a mutual alignment of the optical axes. This constitutes a complicated and challenging process. A poor alignment generally induces polarization aberration which affects the quality of image, i.e., image doubling (US 2015/ 077 663 A1).

An attempted solution to this problem known in the art is the use of alignment layers. More specifically, the alignment material which typically comprises a photo-aligned polymer is staked in layers on a substrate. The alignment material is capable of generating pretilt angles (US 8,358,391 A1).

Another attempted solution constitutes of using a single polarization-dependent LC lens, snap shooting of two frames with computer processing (US 9,380,205 B2). However, with this approach the exposure time is doubled, which decreases the probability of taking a sharp picture due to shake-vibration and scene change possibility.

Additionally, US 2015/ 119 522 A1 discloses an alignment material for a photo-aligning liquid crystal aligning agent, comprising a polymer [A] which is a polyamic acid obtained by reacting a tetracarboxylic acid dianhydride and a diamine.

There is a need for more efficient polarization-independent LC lenses and LC lens systems. Also, there is a need for improved and efficient methods for obtaining such LC lenses and LC lens systems.

### SUMMARY

This disclosure is drawn to an alignment material for a LC lens comprising a co-polymer of a photosensitive monomer and at least one alkyl methacrylate monomer. The material allows for the fabrication of a LC lens or LC lens system that is self-aligned and polarization-independent. The LC lens or LC lens system of this disclosure has a focal length which may be changed in a low voltage controlled manner, such as for example below about 10V AC. The fabrication process of this disclosure allows for a simultaneous fabrication of two orthogonally oriented sub-lenses in a self-aligned manner.

Several aspects and embodiments for the material, LC lens and LC lens system comprising such material, and method for making such LC lens and LC lens system are outlined below.

According to an aspect, this disclosure relates to a liquid crystal (LC) lens comprising: a first planar substrate having on a surface thereof a layer of first alignment material comprising a co-polymer of a first photosensitive monomer and at least one alkyl methacrylate monomer; and a second planar substrate having on a surface thereof a layer of second alignment material comprising a co-polymer of a second photosensitive monomer and at least one alkyl methacrylate monomer, wherein the first and second substrates are assembled in parallel configuration such that the layers of alignment material face each other and are spaced apart, and wherein the first and second photosensitive monomers are of different photosensitivities, and wherein particles of the first alignment material have a pretilt angle gradient that is different from a pretilt angle gradient of the second alignment material.

According to an other aspect, this disclosure relates to an alignment material for the liquid crystal (LC) lens, comprising a co-polymer of a photosensitive monomer and at least one alkyl methacrylate monomer.

In one embodiment, the photosensitive monomer is of general formula **I** or **II**, and the at least one alkyl methacrylate monomer is of general formula **III** 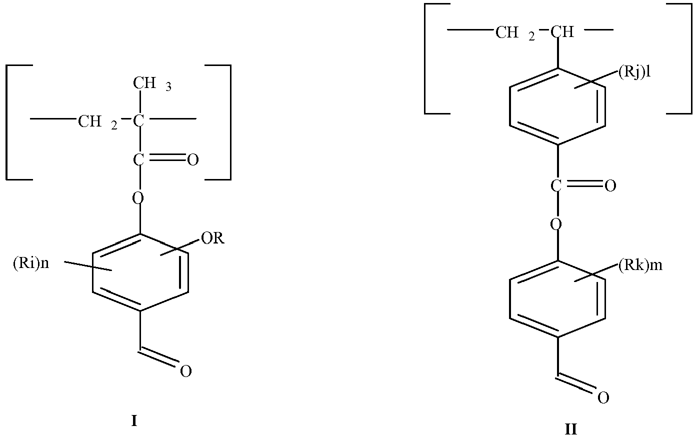 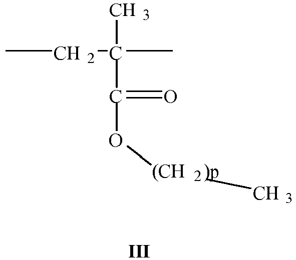 wherein: R is a C₁ to C₁₂ linear, branched, saturated and/or unsaturated alkyl group; Ri, Rj and Rk each independently selected from the group consisting of H and C₁ to C₁₂ linear, branched, saturated and/or unsaturated alkyl groups; n is an integer from 0-3; m and l are each independently an integer from 0-4; and p is an integer from 0-30.

In one embodiment, the photosensitive monomer is of general formula **IA** or **IIA,** and the at least one alkyl methacrylate monomer is of general formula **III** 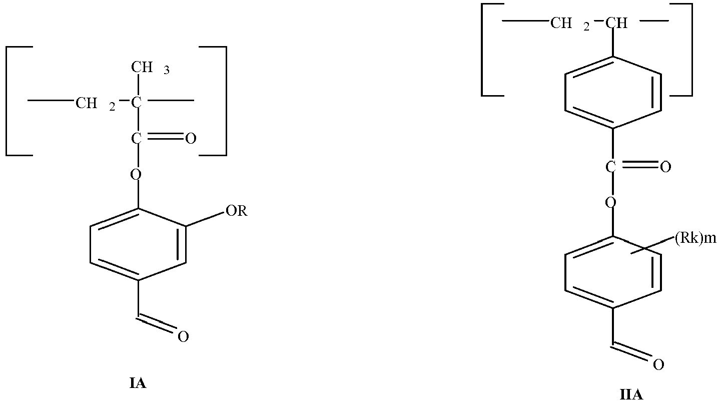 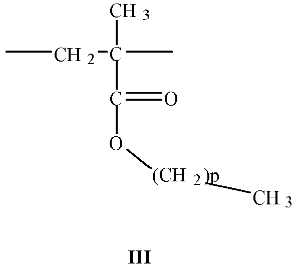 wherein: R is a C₁ to C₆ alkyl group; Rk is a H or a C₁ to C₆ alkyl group; m is an integer from 0-2; and p is an integer from 1-20.

In one embodiment, the photosensitive monomer is of formula **M** or **F,** and the at least one alkyl methacrylate monomer is selected from formulae **VA, PL** and **PL1**

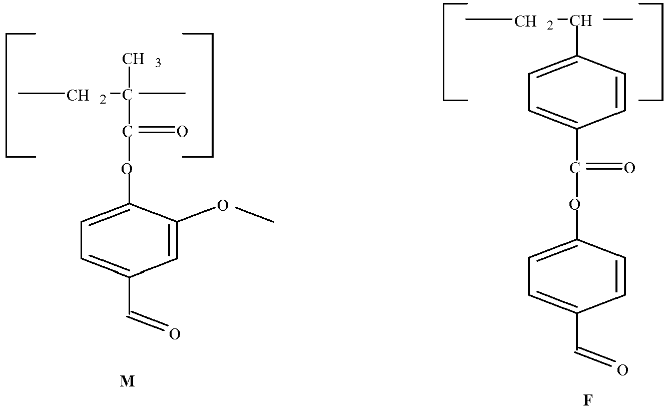

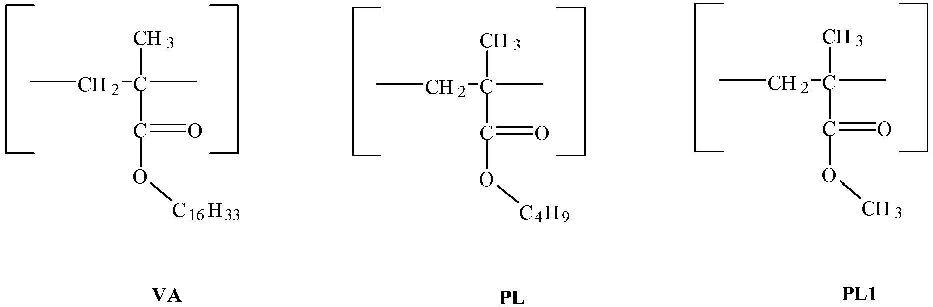

In one embodiment, the co-polymer is of **M, VA, PL** and **PL1** or the co-polymer is of **F, VA, PL** and **PL1**.

In one embodiment, the co-polymer is of **M, VA, PL** and **PL1;** and wherein **M** is present in an amount of about 7-17%mol, preferably about 9-15%mol, more preferably about 12%mol; **VA** is present in an amount of about 2.5-12.5%mol, preferably about 4.5-10.5%mol, more preferably about 7.5%mol; **PL** is present in an amount of is present in an amount of about 65.5-75.5%mol, preferably about 67.5-73.5%mol, more preferably about 70.5%mol; and **PL1** is present in an amount of about 5-15%, preferably about 7-13%mol, more preferably about 10%mol.

In one embodiment, the co-polymer is of **F, VA, PL** and **PL1;** and wherein **F** is present in an amount of about 0.5-9%mol, preferably 2-8%mol, more preferably about 5%mol; **VA** is present in an amount of about 3-15.5%mol, preferably about 4.5-10.5%mol, more preferably about 7.5%mol; **PL** is present in an amount of about 73-82.5%mol, preferably about 74.5-80.5%mol, more preferably 77.5; and **PL1** is present in an amount of about 5.5-15%mol, preferably about 7-13%mol, more preferably about 10%mol.

In one embodiment, the lens further comprises a spacer between the layers of alignment material. In one embodiment, the substrates are attached together at contours thereof, optionally the attachment is made with UV glue.In one embodiment, the substrates are glass substrates. In one embodiment, the lens further comprises an electrode mounted on a surface of at least one of the substrate. In one embodiment, the lens has a focal length which may be controllably changed at a voltage between about 1-10V AC, preferably about 1-5V AC.

According to yet another aspect, this disclosure relates to a liquid crystal (LC) lens system comprising: first planar substrates each having on both surfaces thereof a layer of first alignment material comprising a co-polymer of a first photosensitive monomer and at least one alkyl methacrylate monomer; and second planar substrates each having on both surfaces thereof a layer of second alignment material comprising a co-polymer of a second photosensitive monomer and at least one alkyl methacrylate monomer, wherein the substrates are assembled in parallel configuration such that a layer of first alignment material and a layer of second alignment material face each other and are spaced apart, and wherein the first and second photosensitive monomers are of different photosensitivities, and wherein particles of the first alignment material have a pretilt angle gradient that is different from a pretilt angle gradient of the second alignment material.

In one embodiment, a pretilt angle gradient in the first alignment material on the first substrates is identical, and a pretilt angle gradient in the second alignment material on the second substrates is identical.

According to yet another aspect, this disclosure relates to a method for making the according to the invention electrically tunable liquid crystal (LC) lens, comprising: (a) providing a first planar substrate and a second planar substrate; (b) depositing on a surface of the first substrate a layer of a first alignment material comprising a co-polymer of a first photosensitive monomer and at least one alkyl methacrylate monomer; (c) depositing on a surface of the second substrate a layer of a second alignment material comprising a co-polymer of a second photosensitive monomer and at least one alkyl methacrylate monomer; (d) submitting each of the first substrate obtained at step (b) and the second substrate obtained at step (c) to a soft-baking process; (e) submitting each of the first and second substrates obtained at step (d) to a rubbing process; (f) submitting each of the first and second substrates obtained at step (e) to UV exposure; (g) assembling the first and second substrates obtained at step (f) in parallel configuration such that the layers of alignment material face each other and are spaced apart, wherein the first and second photosensitive monomers are of different photo sensitivities, and wherein particles of the first alignment material have a pretilt angle gradient that is different from a pretilt angle gradient of the second alignment material.

In one embodiment, at steps (b) and (c) the materials are in a solvent and the soft-baking process at step (d) removes the solvent. In one embodiment, at step (e) rubbing directions on the two sides of the substrate are orthogonal, and the rubbing process induces an azimuthal alignment of particles in the materials. In one embodiment, at step (f) a gradient UV exposure is performed simultaneously on two sides of the substrate, and the UV exposure induces a pretilt angle in particles of the alignment materials.

According to yet another aspect, this disclosure relates to a method for making an electrically tunable liquid crystal lens (LC) system, comprising: (a) providing first planar substrates and second planar substrates; (b) depositing on both surfaces of each of the first substrates a layer of a first alignment material comprising a co-polymer of a first photosensitive monomer and at least one alkyl methacrylate monomer; (c) depositing on both surfaces of each of the two second substrates a layer of a second alignment material comprising a co-polymer of a second photosensitive monomer and at least one alkyl methacrylate monomer; (d) submitting each of the first substrates obtained at step (b) and each of the second substrates obtained at step (c) to a soft-baking process; (e) submitting each of the first and second substrates obtained at step (d) to a rubbing process; (f) submitting each of the first and second substrates obtained at step (e) to UV exposure; and (g) assembling the first substrate and second substrates obtained at step (f) in parallel configuration such that a layer of first alignment material and a layer of second alignment material face each other and are spaced apart, wherein the first and second photosensitive monomers are of different photo sensitivities, and wherein particles of the first alignment material have a pretilt angle gradient that is different from a pretilt angle gradient of the second alignment material.

Other features will be apparent from the accompanying drawings and from the detailed description that follows.

### BRIEF DESCRIPTION OF DRAWINGS

Example embodiments are illustrated by way of example and not limitation in the figures of the accompanying drawings, in which like references indicate similar elements and in which:
**FIG. 1** Sequences of a patterned rubbing alignment process.
**FIG. 2a** Structure of a co-polymer of the alignment material.
**FIG. 2b** Chemical formulae of preferred photosensitive monomers.
**FIG. 2c** Chemical formulae of preferred alkyl methacrylate monomers.
**FIG. 2d** General chemical formulae of photosensitive monomers.
**FIG. 2e** General chemical formulae of photosensitive monomers.
**FIG. 2f** General chemical formulae of alkyl methacrylate monomers.
**FIG. 3a** Structure of a LC lens (or sub-lens when staked to constitute a lens system).
**FIG. 3b** Scheme of the LC lens' focus.
**FIG. 4** Absorption spectra of alignment materials with **M**-type photosensitive monomer and **F**-type photosensitive monomer. The thickness of a layer on a substrate is about 40 nm.
**FIG. 5** Pretilt angle dependence on exposure time for alignment material which comprises a co-polymer of **F/PL1-VA-PL** in a ratio 5/10-7.5-77.5. The exposure intensity is 4 mW, UV-B 300-330 nm.
**FIG. 6a** shows two orthogonal LC alignment spherical lens patterns on both sides of a substrate.
**FIG. 6b** Scheme of "round hole" diffraction optical element (DOE) exposure for LC lens pretilt angle gradient alignment layers on both sides of a substrate.
**FIG. 7a** Structure of self-aligned polarization-independent LC lens.
**FIG. 7b** Sample of self-aligned polarization-independent LC lens.
**FIG. 8** Microscopic picture of self-aligned polarization-independent LC lens sample. The top sub-lens (**F**-type) is off by 15V and the bottom sub-lens (**M**-type) voltage changes from 0 to 10V.
**FIG. 9** Direct measurement of LC sub-lens optical phase distribution for applied voltage levels of 0V, 2V and 5V.
**FIG. 10** Dependence of focal length on the applied voltage to electrodes of self-aligned polarization-independent LC lens.

Other features of the present embodiments will be apparent from the accompanying drawings and from the detailed description that follows.

### DETAILED DESCRIPTION

In order to provide a clear and consistent understanding of the terms used in the present disclosure, a number of definitions are provided below. Moreover, unless defined otherwise, all technical and scientific terms as used herein have the same meaning as commonly understood to one of ordinary skill in the art to which this disclosure pertains.

The use of the word "a" or "an" when used in conjunction with the term "comprising" in the claims and/or the description may mean "one", but it is also consistent with the meaning of "one or more", "at least one", and "one or more than one". Similarly, the word "another" may mean at least a second or more.

As used herein, the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or process steps.

As used herein, when referring to numerical values or percentages, the term "about" includes variations due to the methods used to determine the values or percentages, statistical variance and human error. Moreover, each numerical parameter in this application should at least be construed in light of the number of reported significant digits and by applying ordinary rounding techniques.

This disclosure is drawn to an alignment material for a LC lens comprising a co-polymer of a photosensitive monomer and at least one alkyl methacrylate monomer. The material allows for the fabrication of a LC lens or LC lens system that is self-aligned and polarization-independent. The LC lens or LC lens system of this disclosure has a focal length which may be changed in a low voltage controlled manner, such as for example below about 10V AC. The fabrication process of this disclosure allows for a simultaneous fabrication of two orthogonally oriented sub-lenses in a self-aligned manner.

### Description of a preferred embodiment

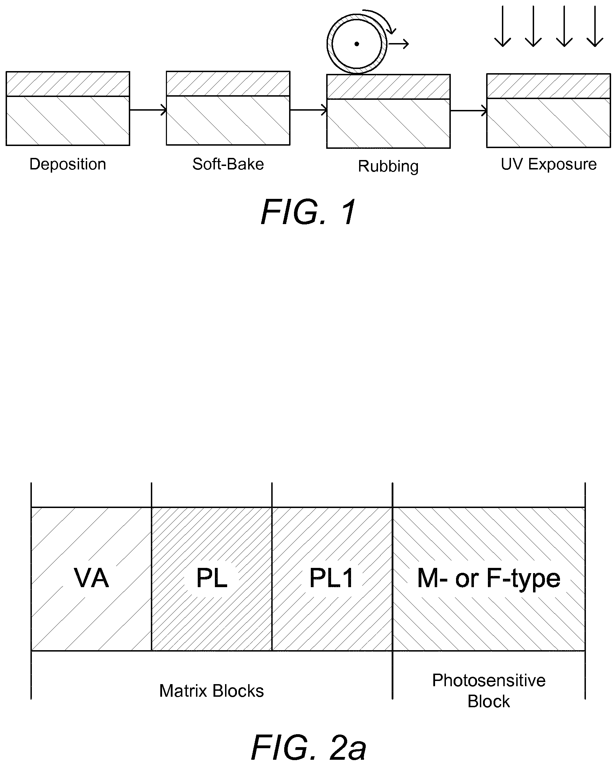

This disclosure provides for a liquid crystal alignment material for patterned rubbing alignment process (**FIG. 1**). The process is applied to create a controllable pretilt angle gradient. The method of fabrication of self-aligned polarization liquid crystal lens is based on application of the liquid crystal alignment materials. As illustrated in **FIG. 1****,** the alignment material is processed in four main steps: a) deposition of a layer (wet film) of alignment material in a solvent, b) soft-baking to remove the solvent, c) rubbing to induce the azimuthal alignment direction and d) UV exposure to induce the pretilt angle.

The alignment material is an organic co-polymer of four monomers. The four monomers are divided in two categories. A first category constituted a photosensitive monomer (photosensitive block) and a second category constituted of at least one alkyl methacrylate (matrix blocks). A structure of the co-polymer is illustrated in **FIG. 2a****.**

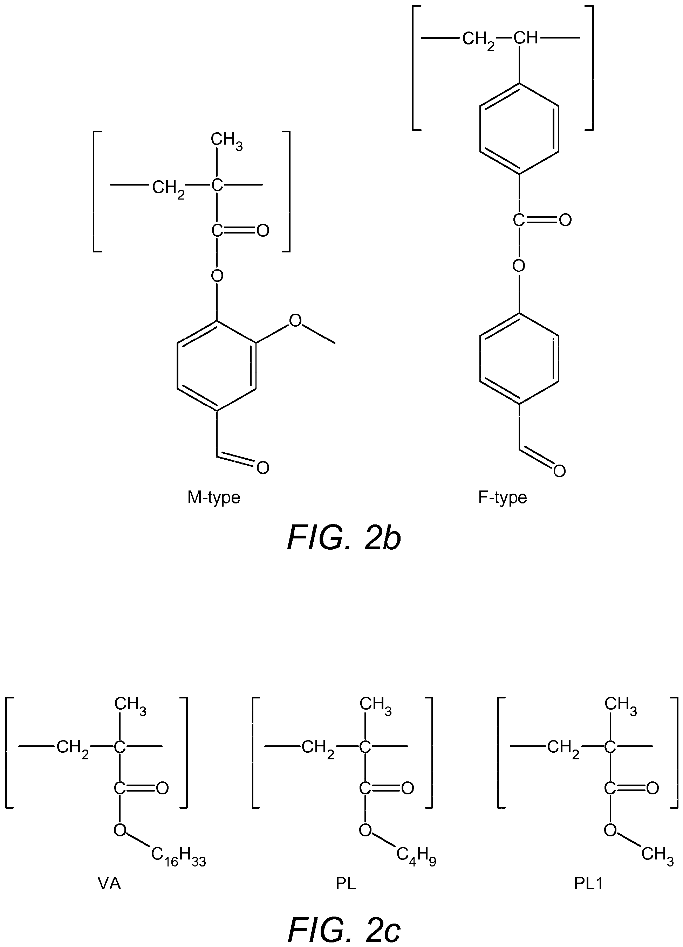

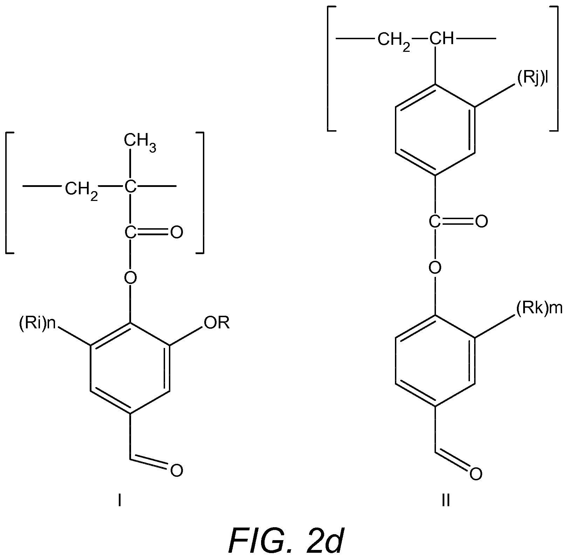

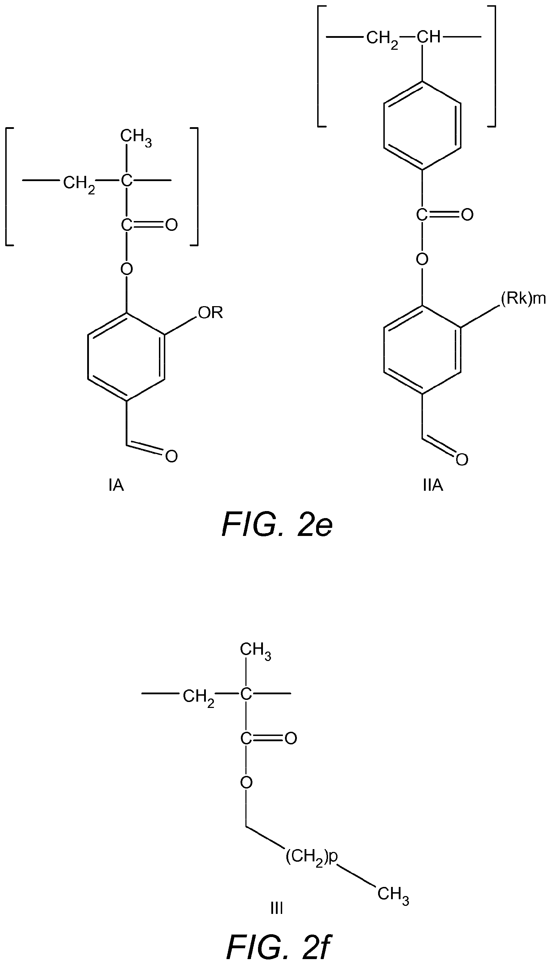

A photosensitive monomer can be of type **M** or type **F.** Preferred photosensitive monomers are illustrated in **FIG. 2b****.** As will be understood by a skilled person, a type **M** photosensitive monomer of this disclosure may be any monomer of general formula **I** or **IA** outlined in **FIG. 2d** and **FIG. 2e** and reproduced below. In these formulae: R is a C₁ to C₁₂ linear, branched, saturated and/or unsaturated alkyl group, preferably R is a C₁ to C₆ alkyl group, more preferably R is CH₃; Ri is H or a C₁ to C₁₂ linear, branched, saturated and/or unsaturated alkyl group, preferably Ri is a H or a C₁ to C₆ alkyl group, more preferably Ri is H; and n is an integer from 0-3, preferably n is 0.

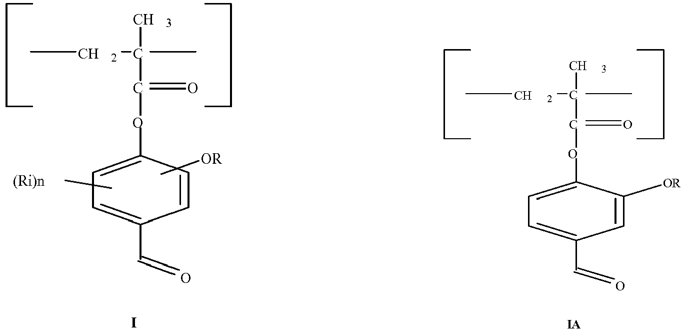

Also, as will be understood by a skilled person, a type F photosensitive monomer of this disclosure may be any monomer of general formula **II** or **IIA** outlined in **FIG. 2d** and **FIG. 2e** and reproduced below. In these formulae: Rj and Rk each independently selected from the group consisting of H and C₁ to C₁₂ linear, branched, saturated and/or unsaturated alkyl groups, preferably Rj and Rk each independently selected from the group consisting of H and C₁ to C₆ alkyl group, more preferably Rj and Rk are each H; and m and l are each independently an integer from 0-4, preferably m and l are each 0.

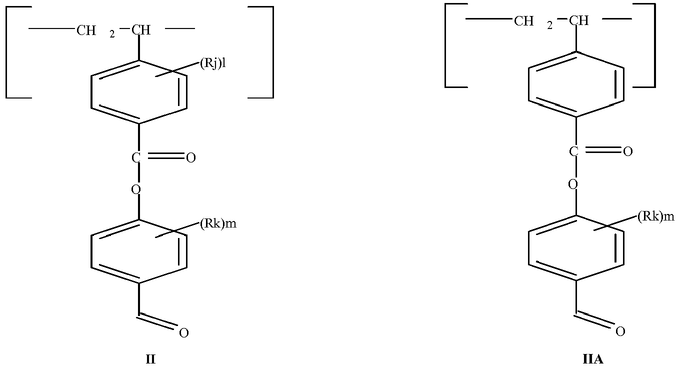

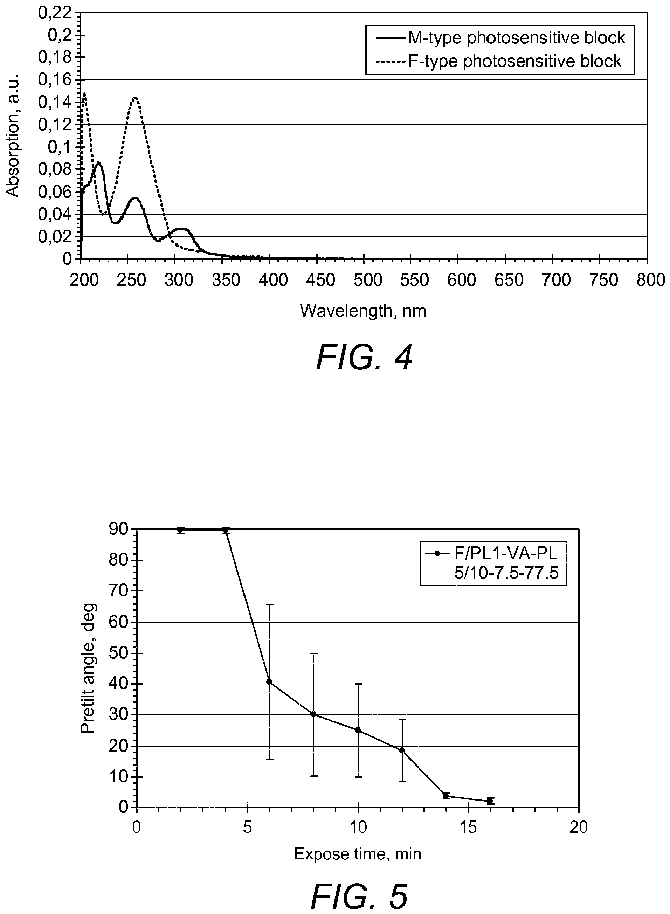

The two types of photosensitive monomers have different photosensitivities. The type **M** photosensitive monomer has a high photosensitivity and the type **F** has a low photosensitivity (**FIG. 4**).

Preferred embodiments of the matrix blocks or alkyl methacrylate monomers are **VA, PL** and **PL1** outlined in **FIG. 2c** and reproduced below.

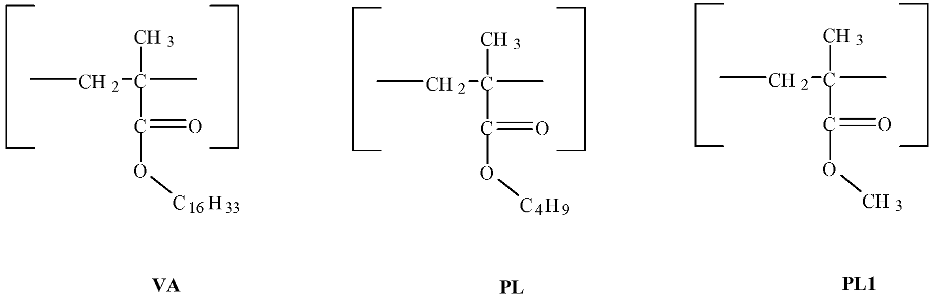

As will be understood by a skilled person, an alkyl methacrylate of this disclosure may be any alkyl methacrylate of general formula **III** outlined in **FIG. 2f** and reproduced below. In this formula, p is an integer from 0-30; preferably p is an integer from 0-20, more preferably p is an integer from 0-15.

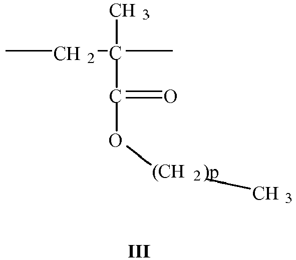

In a preferred embodiment, the co-polymer comprises either the type **M** photosensitive monomer or the type **F** photosensitive monomer as photosensitive block, and the three alkyl methacrylate monomers **VA, PL** and **PL1** as matrix blocks. Such structure is illustrated in **FIG. 2a****.** As will be understood by a skilled person, the co-polymer can be of any suitable combination of these components.

The alignment material is provided in a solvent or liquid crystal. The matrix blocks determine the interaction of the co-polymer with the solvent or liquid crystal. The solvent may be butyl acetate for example or any other suitable solvent.

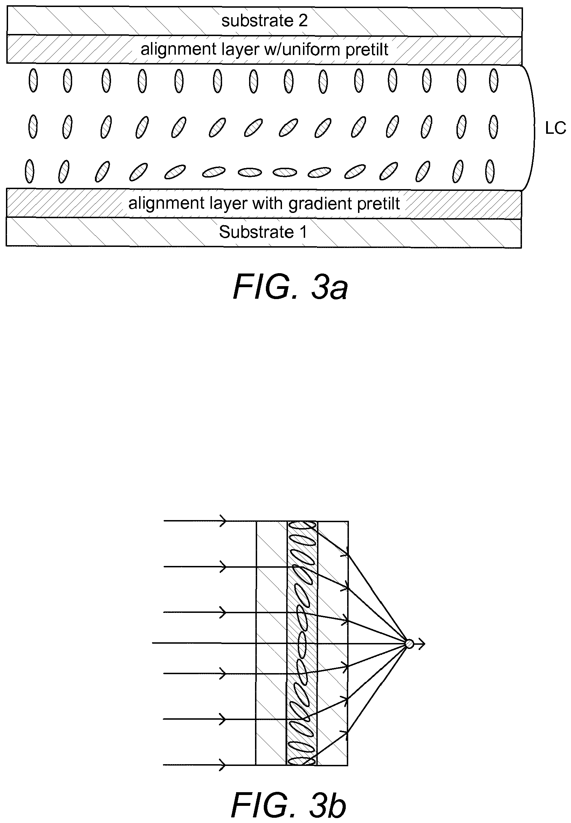

A LC lens (or LC sub-lens when staked to constitute a lens system) is illustrated in **FIG. 3a****.** The lens or sub-lens comprises two substrates. A first substrate which has a layer of alignment material with pretilt angle gradient and a second substrate which has a layer of alignment material with uniform alignment. The alignment material on the first substrate comprises a co-polymer with a type **M** photosensitive monomer (high photosensitivity) and the alignment material on the second substrate comprises a co-polymer with a type **F** photosensitive monomer (low photosensitivity). **FIG. 3b** is a scheme of the lens' focus.

The first and second substrates assembled into the cell or lens such as to create a cell-gap. The cell-gap may be provided by a spacer. The substrates are attached together at their contours. Attachment may be made using UV glue or any other suitable attachment means.

For the fabrication of a lens system with two sub-lenses, both first substrates with alignment material comprising a co-polymer with type **M** monomer (high photosensitivity) are prepared simultaneously, by deposition of the alignment material on both sides of the double side coated ITO glass substrate. The rubbing directions on the two sides of the ITO glass substrate are orthogonal. Gradient UV light exposure is performed simultaneously on both sides of the glass, directly through the glass, on the up and down surface of the glass substrate. This creates an identical pretilt angle gradient on the first substrates (which are the two sides of the same glass substrate) and hence for the two sub-lenses. Also, both second substrates with alignment material comprising a co-polymer with type **F** monomer (low photosensitivity) are prepared simultaneously, thus creating an identical uniform pretilt on the substrate and hence for the two sub-senses.

Since the first substrates of each sub-lens are located on the same piece of glass, there is no need for mutual alignment of the sub-lenses.

The intrinsic self-alignment of sub-lenses is achieved by simultaneous fabrication of mutually centered and aligned pretilt angle gradients of both sub-lenses at both surfaces of the substrate. The latter is achieved by development of new alignment materials - polymers with **M-** and **F**-type photosensitive block for high and low photosensitivity (**FIG. 4**), correspondingly, - that both are capable to change its pretilt angle upon light exposure with UV-B (300-320 nm) spectral range (example **FIG. 5**) in an exposure dose dependent manner.

The high photosensitivity co-polymer comprises 12%mol of **M**-type photosensitive block, 10% mol of **PL1** matrix block, 70.5% mol of **PL** matrix block and 7.5% mol of **VA** matrix block. The low photosensitivity co-polymer comprises 5%mol of F-type photosensitive block, 10% mol of PL1 matrix block, 77.5% mol of **PL** matrix block and 7.5% mol of **VA** matrix block.

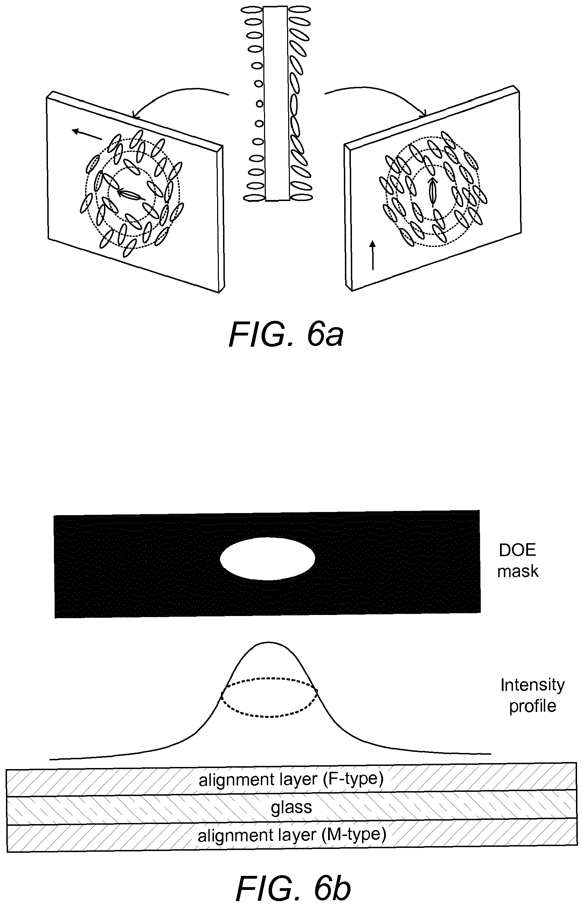

The difference in the photosensitivity of the alignment materials with **M-** and **F**-type photosensitive groups (**FIG. 4**) allows achieving similar gradient of the pretilt angle, when low/high sensitivity material is deposited on top/bottom of the substrate, rubbed in orthogonal directions, correspondingly (**FIG. 6a**) and light exposure is performed from the top side of the substrate (**FIG. 6b**). "DOE Mask" is a diffraction optical element mask or a photomask that provides light intensity distribution at the surface on the first substrate, which induces LC lens pretilt angle gradient generation upon photo exposure through the mask.

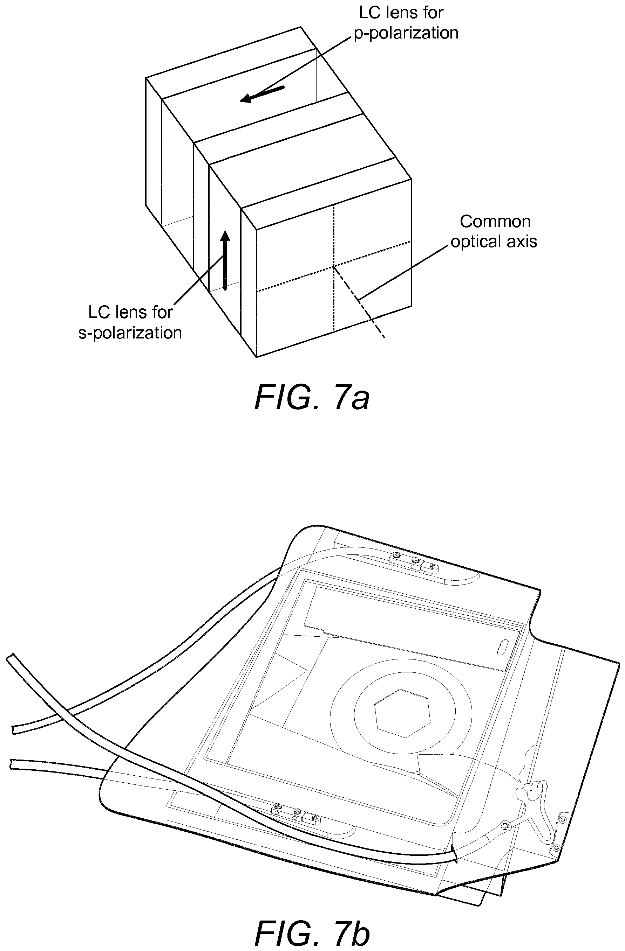

The self-aligned polarization-independent LC lens system (**FIG. 7**) comprises two sub-lenses, which has two electrodes each at top and bottom substrates. Hence voltage application to the sub-lens requires two wires, and four wires total for the polarization-independent LC liquid crystal lens system. It should be noted that using common ground wire for both sub-lenses reduces the number of control wires to three and remains the ability of independent control of each sub-lens. However, if independent control of each lens is not required, two wires only are sufficient: one common ground and one common control voltage.

Each sub-lens has two electrodes. The first electrode of a sub-lens is short-circuited to the first electrode of another sub-lens, while the second electrode of a sub-lens is short-circuited to the second electrode of another sub-lens. Thus there are two electric wires connected to the first and the second electrodes.

The two sub-lenses are orthogonal to each other. The identical pretilt angle gradient and the same thickness of the sub-lenses result into mutual birefringence compensation. In that case the phase gradient of the polarization-independent LC lens system is not observed in the polarization microscope what the lens is at 45 degree to the polarizer crossed with analyzer.

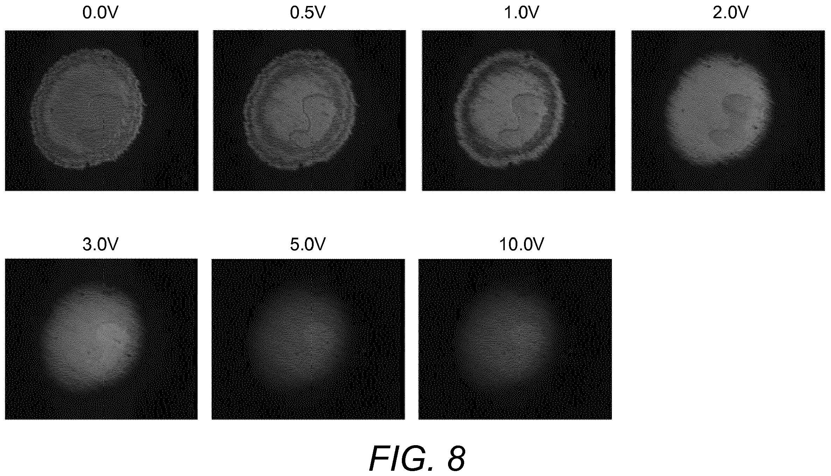

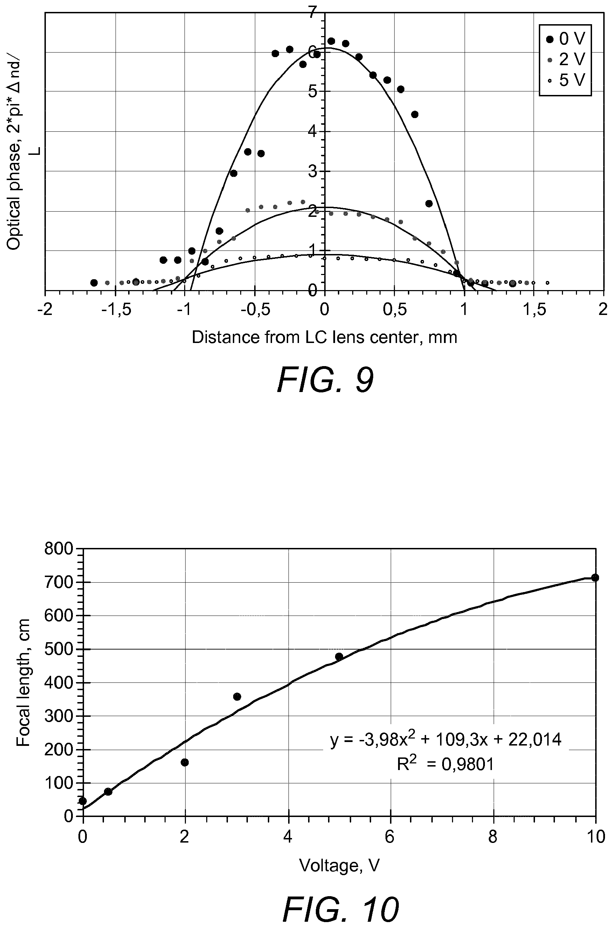

In order to observe and analyze the optical phase distribution, independent control of the LC lens sample was performed. First, high voltage level of 15 V was applied to top sub-lens to turn the lens off by switching the liquid crystal into uniform vertical orientation. Then different voltage levels of 0 to 10 V were applied (**FIG. 8****)**. As can be seen in **FIG. 8****,** 10 V is sufficient to switch the liquid crystal of the sub-lens into vertical state and almost completely turn off the distribution of optical phase gradient into uniform phase plate, which corresponds to the lens with infinite focal length. We conclude that the operation voltage levels of the obtained LC lens for tunable focal length are below 10 V AC 1 kHz. The phase distribution of the liquid crystal lens under operation at different applied voltage levels is shown in **FIG. 8****.**

The dependences of optical phase on the distance from LC lens center were plotted for different voltage levels (**FIG. 9**). The obtained dependence of the focal length on the applied voltage for the LC lens sample is plotted in **FIG. 10****.**

Although the present embodiments have been described with reference to specific example embodiments, it will be evident that various modifications and changes may be made to these embodiments without departing from the broader scope of the various embodiments.

### INDUSTRIAL APPLICABILITY

The fabrication process of this disclosure allows for a simultaneous fabrication of two orthogonally oriented sub-lenses in a self-aligned manner, thereby avoiding use of alignment mechanical equipment. The LC lens or LC lens system of this disclosure can be used in various types of camera and web-camera including cell phone and tablet cameras. The LC lens or LC lens system of this disclosure can also be used in light field cameras for 3D image capture or 3D microscopy, and in autostereoscopic and holographic 3D displays for glasses free 3D image display. Accordingly, the specification and drawings are to be regarded in an illustrative rather than a restrictive sense.

## Claims

1. A liquid crystal (LC) lens **characterized in that** it comprises:
a first planar substrate having on a surface thereof a layer of a first alignment material comprising a co-polymer of a first photosensitive monomer and at least one alkyl methacrylate monomer; and
a second planar substrate having on a surface thereof a layer of a second alignment material comprising a co-polymer of a second photosensitive monomer and at least one alkyl methacrylate monomer,
wherein the first and second substrates are assembled in parallel configuration such that the layers of alignment material face each other and are spaced apart,
and wherein the first and second photosensitive monomers have different photosensitivities, and wherein particles of the first alignment material have a pretilt angle gradient that is different from a pretilt angle gradient of the second alignment material.

2. The liquid crystal lens of claim 1, further comprising a spacer between the layers of alignment material.

3. The liquid crystal lens of claim 1, wherein the substrates are attached together at contours thereof, optionally the attachment is made with UV glue.

4. The liquid crystal lens of claim 1, wherein the substrates are glass substrates.

5. The liquid crystal lens of claim 1, further comprising an electrode mounted on a surface of at least one of the substrates.

6. The liquid crystal lens of claim 1, having a focal length which may be controllably changed at a voltage between about 1-10V AC.

7. A liquid crystal (LC) lens system **characterized in that** it comprises:
first planar substrates each having on both surfaces thereof a layer of a first alignment material comprising a co-polymer of a first photosensitive monomer and at least one alkyl methacrylate monomer; and
second planar substrates each having on both surfaces thereof a layer of a second alignment material comprising a co-polymer of a second photosensitive monomer and at least one alkyl methacrylate monomer,
wherein the substrates are assembled in parallel configuration such that a layer of the first alignment material and a layer of the second alignment material face each other and are spaced apart,
and wherein the first and second photosensitive monomers have different photosensitivities, and wherein particles of the first alignment material have a pretilt angle gradient that is different from a pretilt angle gradient of the second alignment material.

8. The liquid crystal lens system of claim 7, wherein a pretilt angle gradient in the first alignment material on the first substrates is identical, and a pretilt angle gradient in the second alignment material on the second substrates is identical.

9. The liquid crystal (LC) lens of claim 1 or the liquid crystal lens system of claim 7, wherein the photosensitive monomer is of general formula **I** or **II**, and the at least one alkyl methacrylate monomer is of general formula **III** 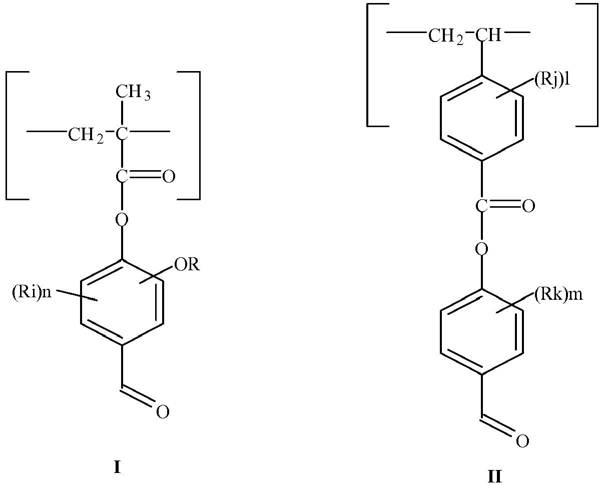 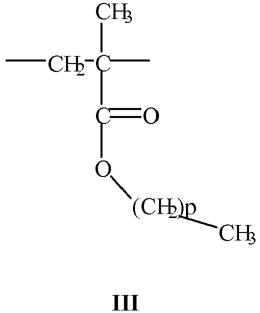 wherein: R is a C₁ to C₁₂ linear, branched, saturated and/or unsaturated alkyl group; Ri, Rj and Rk are each independently selected from the group consisting of H and C₁ to C₁₂ linear, branched, saturated and/or unsaturated alkyl groups; n is an integer from 0-3; m and l are each independently an integer from 0-4; and p is an integer from 0-30.

10. The liquid crystal (LC) lens of claim 1 or the liquid crystal lens system of claim 7, wherein wherein the photosensitive monomer is of general formula **IA** or **IIA,** and the at least one alkyl methacrylate monomer is of general formula **III** 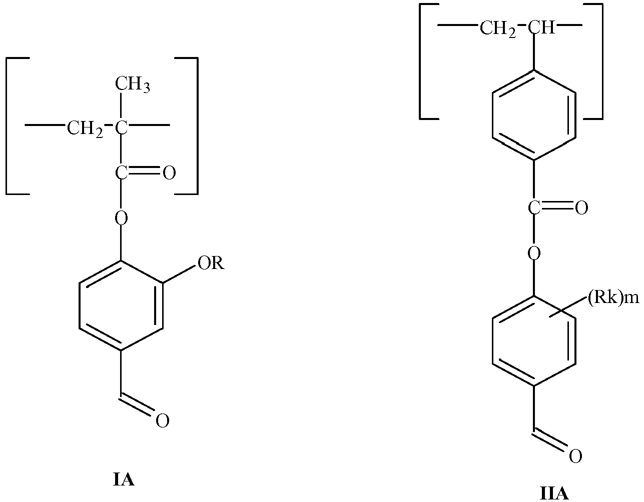 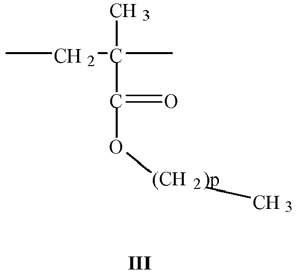 wherein: R is a C₁ to C₆ alkyl group; Rk is a H or a C₁ to C₆ alkyl group; m is an integer from 0-2; and p is an integer from 1-20.

11. The liquid crystal (LC) lens of claim 1 or the liquid crystal lens system of claim 7, wherein the photosensitive monomer is of formula **M** or **F,** and the at least one alkyl methacrylate monomer is selected from formulae **VA, PL** and **PL1**

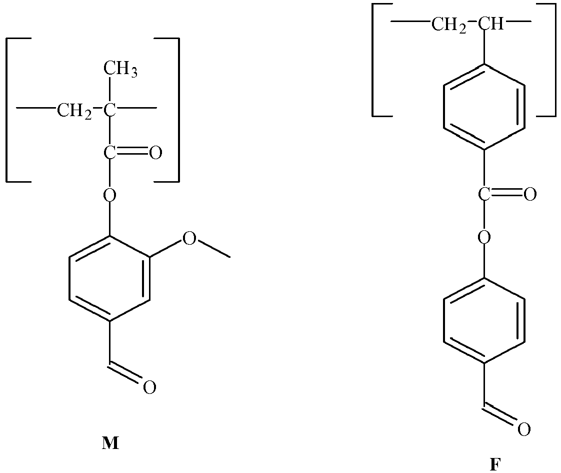

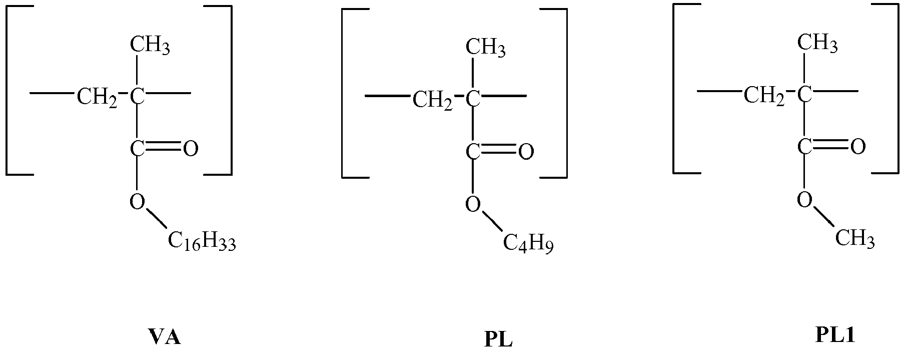

12. The liquid crystal (LC) lens or the liquid crystal lens system of claim 11, wherein the co-polymer is of **M**, **VA, PL** and **PL1** or the co-polymer is of **F**, **VA, PL** and **PL1.**

13. The liquid crystal (LC) lens or the liquid crystal lens system of claim 11, wherein the co-polymer is of **M, VA, PL** and **PL1;** and wherein **M** is present in an amount of about 7-17%mol; **VA** is present in an amount of about 2.5-12.5%mol; **PL** is present in an amount of about 65.5-75.5%mol; and **PL1** is present in an amount of about 5-15%mol.

14. The liquid crystal (LC) lens or the liquid crystal lens system of claim 11, wherein the co-polymer is of **F, VA, PL** and **PL1;** and wherein **F** is present in an amount of about 0.5-9%mol; **VA** is present in an amount of about 3-15.5%mol; **PL** is present in an amount of about 73-82.5%mol; and **PL1** is present in an amount of about 5.5-15%mol.

15. A method for making an electrically tunable liquid crystal (LC) lens, comprising:
(a) providing a first planar substrate and a second planar substrate;
(b) depositing on a surface of the first substrate a layer of a first alignment material comprising a co-polymer of a first photosensitive monomer and at least one alkyl methacrylate monomer;
(c) depositing on a surface of the second substrate a layer of a second alignment material comprising a co-polymer of a second photosensitive monomer and at least one alkyl methacrylate monomer;
(d) submitting each of the first substrate obtained at step (b) and the second substrate obtained at step (c) to a soft-baking process;
(e) submitting each of the first and second substrates obtained at step (d) to a rubbing process;
(f) submitting each of the first and second substrates obtained at step (e) to UV exposure;
(g) assembling the first and second substrates obtained at step (f) in parallel configuration such that the layers of alignment material face each other and are spaced apart,
wherein the first and second photosensitive monomers have different photosensitivities,
and wherein particles of the first alignment material have a pretilt angle gradient that is different from a pretilt angle gradient of the second alignment material.

16. The method of claim 15, wherein at steps (b) and (c) the materials are in a solvent, and the soft-baking process at step (d) removes the solvent.

17. The method of claim 15, wherein at step (e) rubbing directions on the two sides of the substrate are orthogonal, and the rubbing process induces an azimuthal alignment of particles in the materials.

18. The method of claim 15, wherein at step (f) a gradient UV exposure is performed simultaneously on two sides of the substrate, and the UV exposure induces a pretilt angle in particles of the alignment materials.

19. A method for making an electrically tunable liquid crystal lens (LC) system, comprising:
(a) providing first planar substrates and second planar substrates;
(b) depositing on both surfaces of each of the first substrates a layer of a first alignment material according to any one of claims 1 to 6 comprising a co-polymer of a first photosensitive monomer and at least one alkyl methacrylate monomer;
(c) depositing on both surfaces of each of the two second substrates a layer of a second alignment material according to any one of claims 1 to 6 comprising a co-polymer of a second photosensitive monomer and at least one alkyl methacrylate monomer;
(d) submitting each of the first substrates obtained at step (b) and each of the second substrates obtained at step (c) to a soft-baking process;
(e) submitting each of the first and second substrates obtained at step (d) to a rubbing process;
(f) submitting each of the first and second substrates obtained at step (e) to UV exposure; and
(g) assembling the first substrate and second substrates obtained at step (f) in parallel configuration such that a layer of first alignment material and a layer of second alignment material face each other and are spaced apart,
wherein the first and second photosensitive monomers are of different photosensitivities,
and wherein particles of the first alignment material have a pretilt angle gradient that is different from a pretilt angle gradient of the second alignment material.

## Patentansprüche

1. Flüssigkristalllinse (LC-Linse), **dadurch gekennzeichnet, dass** sie umfasst:
ein erstes planares Substrat, aufweisend auf einer Oberfläche davon eine Schicht aus einem ersten Ausrichtungsmaterial, umfassend ein Copolymer aus einem ersten lichtempfindlichen Monomer und mindestens einem Alkylmethacrylat-Monomer; und
ein zweites planares Substrat, aufweisend auf einer Oberfläche davon eine Schicht aus einem zweiten Ausrichtungsmaterial, umfassend ein Copolymer aus einem zweiten lichtempfindlichen Monomer und mindestens einem Alkylmethacrylat-Monomer,
wobei das erste und das zweite Substrat in paralleler Anordnung so angeordnet sind, dass die Schichten aus dem Ausrichtungsmaterial einander gegenüberliegen und voneinander beabstandet sind,
und wobei das erste und das zweite lichtempfindliche Monomer unterschiedliche Lichtempfindlichkeiten aufweisen,
und wobei Partikel des ersten Ausrichtungsmaterials einen Gradienten des Vorneigungswinkels aufweisen, der sich von einem Gradienten des Vorneigungswinkels des zweiten Ausrichtungsmaterials unterscheidet.

2. Flüssigkristalllinse nach Anspruch 1, weiterhin umfassend einen Abstandshalter zwischen den Schichten aus dem Ausrichtungsmaterial.

3. Flüssigkristalllinse nach Anspruch 1, wobei die Substrate an deren Umrisslinien miteinander verbunden sind, die Verbindung gegebenenfalls mit UV-Klebstoff hergestellt wird.

4. Flüssigkristalllinse nach Anspruch 1, wobei die Substrate Glassubstrate sind.

5. Flüssigkristalllinse nach Anspruch 1, weiterhin umfassend eine Elektrode, angebracht an einer Oberfläche von mindestens einem der Substrate.

6. Flüssigkristalllinse nach Anspruch 1, die eine Brennweite aufweist, die bei einer Wechselspannung zwischen etwa 1-10 V steuerbar verändert werden kann.

7. Flüssigkristalllinsensystem (LC-Linsensystem), **dadurch gekennzeichnet, dass** es umfasst:
erste planare Substrate, jeweils aufweisend auf beiden Oberflächen davon eine Schicht aus einem ersten Ausrichtungsmaterial, umfassend ein Copolymer aus einem ersten lichtempfindlichen Monomer und mindestens einem Alkylmethacrylat-Monomer; und
zweite planare Substrate, jeweils aufweisend auf beiden Oberflächen davon eine Schicht aus einem zweiten Ausrichtungsmaterial, umfassend ein Copolymer aus einem zweiten lichtempfindlichen Monomer und mindestens einem Alkylmethacrylat-Monomer, wobei die Substrate in paralleler Anordnung so eingefügt sind, dass eine Schicht aus dem ersten Ausrichtungsmaterial und eine Schicht aus dem zweiten Ausrichtungsmaterial einander gegenüberliegen und voneinander beabstandet sind,
und wobei das erste und das zweite lichtempfindliche Monomer unterschiedliche Lichtempfindlichkeiten aufweisen,
und wobei Partikel des ersten Ausrichtungsmaterials einen Gradienten des Vorneigungswinkels aufweisen, der sich von einem Gradienten des Vorneigungswinkels des zweiten Ausrichtungsmaterials unterscheidet.

8. Flüssigkristalllinsensystem nach Anspruch 7, wobei ein Gradient des Vorneigungswinkels in dem ersten Ausrichtungsmaterial auf den ersten Substraten gleich ist, und ein Gradient des Vorneigungswinkels in dem zweiten Ausrichtungsmaterial auf den zweiten Substraten gleich ist.

9. Flüssigkristalllinse (LC-Linse) nach Anspruch 1 oder Flüssigkristalllinsensystem nach Anspruch 7, wobei das lichtempfindliche Monomer von der allgemeinen Formel **I** oder **II** ist, und das mindestens eine Alkylmethacrylat-Monomer von der allgemeinen Formel **III** ist, 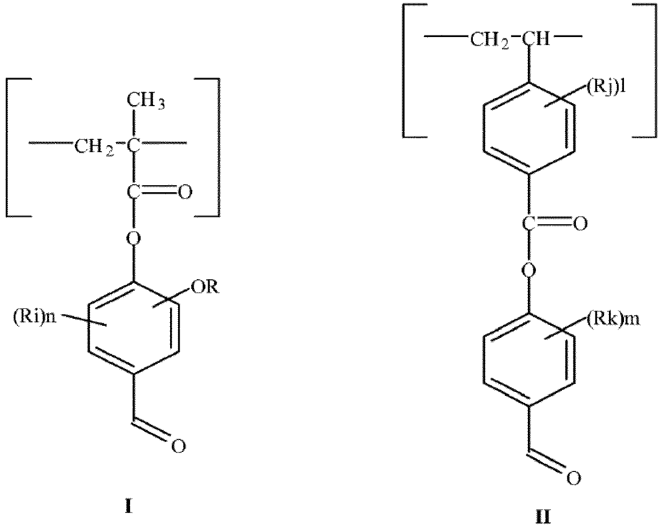 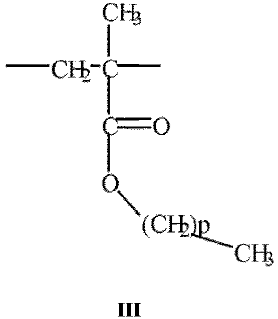 wobei: R ein linearer, verzweigter, gesättigter und/oder ungesättigter C₁- bis C₁₂-Alkylrest ist; Ri, Rj und Rk jeweils unabhängig voneinander ausgewählt sind aus der Gruppe bestehend aus H und linearen, verzweigten, gesättigten und/oder ungesättigten C₁- bis C₁₂-Alkylresten; n eine ganze Zahl von 0-3 ist; m und l jeweils unabhängig voneinander eine ganze Zahl von 0-4 sind; und p eine ganze Zahl von 0-30 ist.

10. Flüssigkristalllinse (LC-Linse) nach Anspruch 1 oder Flüssigkristalllinsensystem nach Anspruch 7, wobei das lichtempfindliche Monomer von der allgemeinen Formel **IA** oder **IIA** ist, und das mindestens eine Alkylmethacrylat-Monomer von der allgemeinen Formel **III** ist, 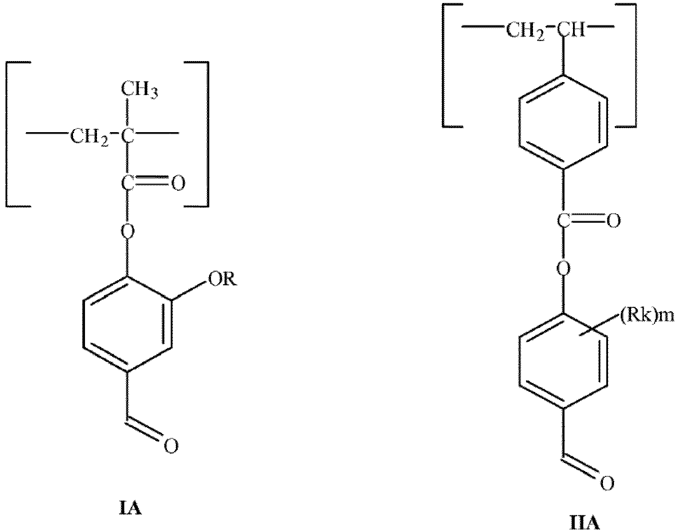 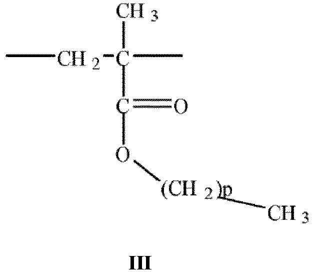 wobei: R ein C₁- bis C₆-Alkylrest ist; Rk H oder ein C₁- bis C₆-Alkylrest ist; m eine ganze Zahl von 0-2 ist; und p eine ganze Zahl von 1-20 ist.

11. Flüssigkristalllinse (LC-Linse) nach Anspruch 1 oder Flüssigkristalllinsensystem nach Anspruch 7, wobei das lichtempfindliche Monomer von der Formel **M** oder **F** ist, und das mindestens eine Alkylmethacrylat-Monomer ausgewählt ist aus den Formeln **VA, PL** und **PL1,**

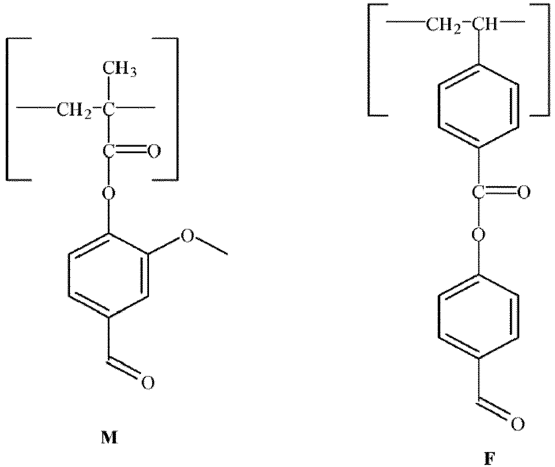

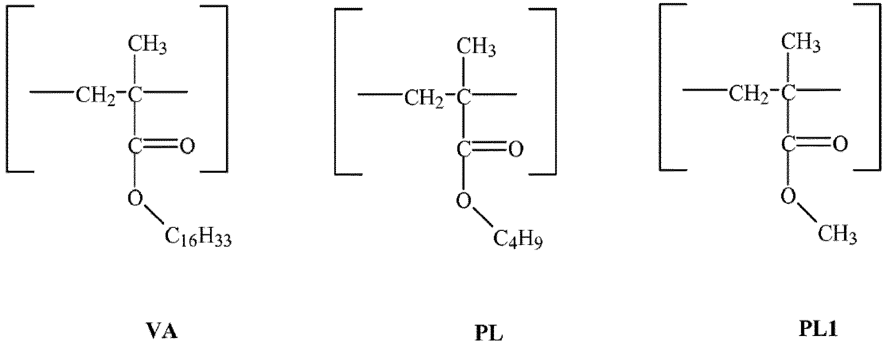

12. Flüssigkristalllinse (LC-Linse) oder Flüssigkristalllinsensystem nach Anspruch 11, wobei das Copolymer aus **M, VA, PL** und **PL1** ist oder das Copolymer aus **F, VA, PL** und **PL1** ist.

13. Flüssigkristalllinse (LC-Linse) oder Flüssigkristalllinsensystem nach Anspruch 11, wobei das Copolymer aus **M, VA, PL** und **PL1** ist; und wobei **M** in einer Menge von etwa 7-17 Mol-% vorliegt; **VA** in einer Menge von etwa 2,5-12,5 Mol-% vorliegt; **PL** in einer Menge von etwa 65,5-75,5 Mol-% vorliegt; und **PL1** in einer Menge von etwa 5-15 % vorliegt.

14. Flüssigkristalllinse (LC-Linse) oder Flüssigkristalllinsensystem nach Anspruch 11, wobei das Copolymer aus **F, VA, PL** und **PL1** ist; und wobei **F** in einer Menge von etwa 0,5-9 Mol-% vorliegt; **VA** in einer Menge von etwa 3-15,5 Mol-% vorliegt; **PL** in einer Menge von etwa 73-82,5 Mol-% vorliegt; und **PL1** in einer Menge von etwa 5,5-15 Mol-% vorliegt.

15. Verfahren zur Herstellung einer elektrisch einstellbaren Flüssigkristalllinse (LC-Linse), umfassend:
(a) Bereitstellen eines ersten planaren Substrates und eines zweiten planaren Substrates;
(b) Abscheiden auf einer Oberfläche des ersten Substrates einer Schicht aus einem ersten Ausrichtungsmaterial, umfassend ein Copolymer aus einem ersten lichtempfindlichen Monomer und mindestens einem Alkylmethacrylat-Monomer;
(c) Abscheiden auf einer Oberfläche des zweiten Substrates einer Schicht aus einem zweiten Ausrichtungsmaterial, umfassend ein Copolymer aus einem zweiten lichtempfindlichen Monomer und mindestens einem Alkylmethacrylat-Monomer;
(d) Unterziehen jedes von dem in Schritt (b) erhaltenen ersten Substrat und dem in Schritt (c) erhaltenen zweiten Substrat einem Soft-Bake-Prozess;
(e) Unterziehen jedes von dem in Schritt (d) erhaltenen ersten und zweiten Substrat einem Reibprozess;
(f) Unterziehen jedes von dem in Schritt (e) erhaltenen ersten und zweiten Substrat einer UV-Belichtung;
(g) Einfügen des in Schritt (f) erhaltenen ersten und zweiten Substrates in paralleler Anordnung derart, dass die Schichten aus dem Ausrichtungsmaterial einander gegenüberliegen und voneinander beabstandet sind,
wobei das erste und das zweite lichtempfindliche Monomer unterschiedliche Lichtempfindlichkeiten aufweisen,
und wobei Partikel des ersten Ausrichtungsmaterials einen Gradienten des Vorneigungswinkels aufweisen, der sich von einem Gradienten des Vorneigungswinkels des zweiten Ausrichtungsmaterials unterscheidet.

16. Verfahren nach Anspruch 15, wobei sich in den Schritten (b) und (c) die Materialien in einem Lösungsmittel befinden, und der Soft-Bake-Prozess in Schritt (d) das Lösungsmittel entfernt.

17. Verfahren nach Anspruch 15, wobei in Schritt (e) die Reibrichtungen auf den beiden Seiten des Substrates orthogonal sind, und der Reibprozess eine azimuthale Ausrichtung der Partikel in den Materialien induziert.

18. Verfahren nach Anspruch 15, wobei in Schritt (f) eine Gradienten-UV-Belichtung auf beiden Seiten des Substrates gleichzeitig durchgeführt wird, und die UV-Belichtung einen Vorneigungswinkel bei Partikeln der Ausrichtungsmaterialien induziert.

19. Verfahren zur Herstellung eines elektrisch einstellbaren Flüssigkristalllinsensystems (LC-Linsensystems) umfassend:
(a) Bereitstellen erster planarer Substrate und zweiter planarer Substrate;
(b) Abscheiden auf beiden Oberflächen jedes der ersten Substrate einer Schicht aus einem ersten Ausrichtungsmaterial nach einem der Ansprüche 1 bis 6, umfassend ein Copolymer aus einem ersten lichtempfindlichen Monomer und mindestens einem Alkylmethacrylat-Monomer;
(c) Abscheiden auf beiden Oberflächen jedes der zwei zweiten Substrate einer Schicht aus einem zweiten Ausrichtungsmaterial nach einem der Ansprüche 1 bis 6, umfassend ein Copolymer aus einem zweiten lichtempfindlichen Monomer und mindestens einem Alkylmethacrylat-Monomer;
(d) Unterziehen jedes der in Schritt (b) erhaltenen ersten Substrate und jedes der in Schritt (c) erhaltenen zweiten Substrate einem Soft-Bake-Prozess;
(e) Unterziehen jedes der in Schritt (d) erhaltenen ersten und zweiten Substrate einem Reibprozess;
(f) Unterziehen jedes der in Schritt (e) erhaltenen ersten und zweiten Substrate einer UV-Belichtung; und
(g) Einfügen des ersten Substrates und der zweiten Substrate, erhalten in Schritt (f), in paralleler Anordnung derart, dass eine Schicht aus dem ersten Ausrichtungsmaterial und eine Schicht aus dem zweiten Ausrichtungsmaterial einander gegenüberliegen und voneinander beabstandet sind,
wobei das erste und das zweite lichtempfindliche Monomer von unterschiedlichen Lichtempfindlichkeiten sind,
und wobei Partikel des ersten Ausrichtungsmaterials einen Gradienten des Vorneigungswinkels aufweisen, der sich von einem Gradienten des Vorneigungswinkels des zweiten Ausrichtungsmaterials unterscheidet.

## Revendications

1. Lentille à cristaux liquides (LC) **caractérisée en ce qu'**elle comprend :
un premier substrat planaire ayant, sur une surface de celui-ci, une couche d'un premier matériau d'alignement comprenant un copolymère d'un premier monomère photosensible et au moins un monomère de méthacrylate d'alkyle ; et
un deuxième substrat planaire ayant, sur une surface de celui-ci, une couche d'un deuxième matériau d'alignement comprenant un copolymère d'un deuxième monomère photosensible et au moins un monomère de méthacrylate d'alkyle,
le premier et le deuxième substrats étant assemblés en configuration parallèle, de telle sorte que les couches de matériau d'alignement se font face et sont à distance l'une de l'autre,
et les premier et deuxième monomères photosensibles ayant des photosensibilités différentes,
et des particules du premier matériau d'alignement ayant un gradient d'angle de pré-inclinaison qui est différent d'un gradient d'angle de pré-inclinaison du deuxième matériau d'alignement.

2. Lentille à cristaux liquides selon la revendication 1, comprenant en outre un espaceur entre les couches de matériau d'alignement.

3. Lentille à cristaux liquides selon la revendication 1, les substrats étant fixés ensemble par leurs contours, la fixation étant réalisée facultativement avec de la colle UV.

4. Lentille à cristaux liquides selon la revendication 1, les substrats étant des substrats en verre.

5. Lentille à cristaux liquides selon la revendication 1, comprenant en outre une électrode montée sur une surface d'au moins un des substrats.

6. Lentille à cristaux liquides selon la revendication 1, ayant une longueur focale qui peut être modifiée de façon contrôlable, à une tension entre environ 1 et 10 V CA.

7. Système de lentille à cristaux liquides (LC) **caractérisé en ce qu'**il comprend :
des premiers substrats planaires ayant, sur les deux surfaces de ceux-ci, une couche d'un premier matériau d'alignement comprenant un copolymère d'un premier monomère photosensible et au moins un monomère de méthacrylate d'alkyle ; et
des deuxièmes substrats planaires ayant, sur les deux surfaces de ceux-ci, une couche d'un deuxième matériau d'alignement comprenant un copolymère d'un deuxième monomère photosensible et au moins un monomère de méthacrylate d'alkyle,
les substrats étant assemblés en configuration parallèle, de telle sorte qu'une couche du premier matériau d'alignement et une couche du deuxième matériau d'alignement se font face et sont à distance l'une de l'autre,
et les premier et deuxième monomères photosensibles ayant des photosensibilités différentes,
et des particules du premier matériau d'alignement ayant un gradient d'angle de pré-inclinaison qui est différent d'un gradient d'angle de pré-inclinaison du deuxième matériau d'alignement.

8. Système de lentille à cristaux liquides selon la revendication 7, un gradient d'angle de pré-inclinaison dans le premier matériau d'alignement est identique sur les premiers substrats, et un gradient d'angle de pré-inclinaison dans le deuxième matériau d'alignement est identique sur les deuxièmes substrats.

9. Lentille à cristaux liquides (LC) selon la revendication 1 ou système de lentille à cristaux liquides selon la revendication 7, le monomère photosensible ayant la formule générale **I** ou **II,** et l'au moins un monomère de méthacrylate d'alkyle ayant la formule générale **III** : 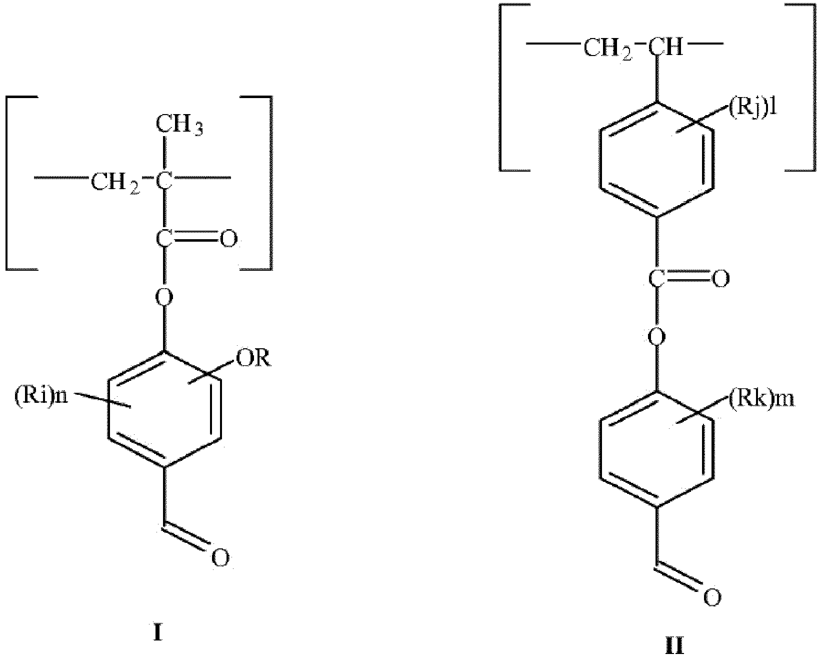 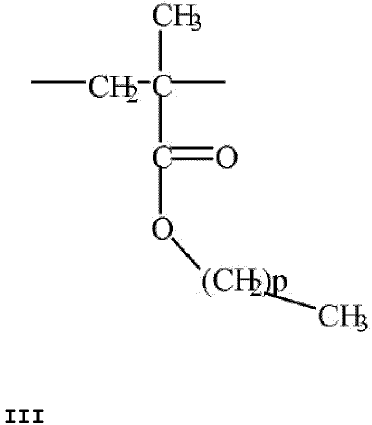 R étant un groupe alkyle linéaire, ramifié, saturé et/ou insaturé C₁ à C₁₂ ; Ri, Rj et Rk étant chacun sélectionnés indépendamment parmi le groupe se composant de H et de groupes alkyles linéaires, ramifiés, saturés et/ou insaturés C₁ à C₁₂ ; n étant un entier de 0 à 3 ; m et l étant chacun indépendamment un entier de 0 à 4 ; et p étant un entier de 0 à 30.

10. Lentille à cristaux liquides (LC) selon la revendication 1 ou système de lentille à cristaux liquides selon la revendication 7, le monomère photosensible ayant la formule générale **IA** ou **IIA,** et l'au moins un monomère de méthacrylate d'alkyle ayant la formule générale **III** : 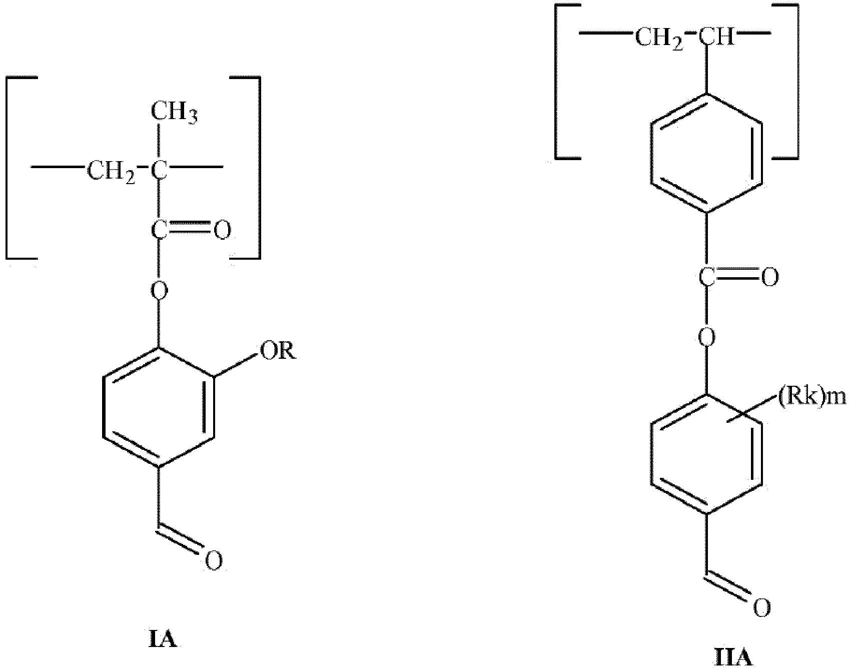 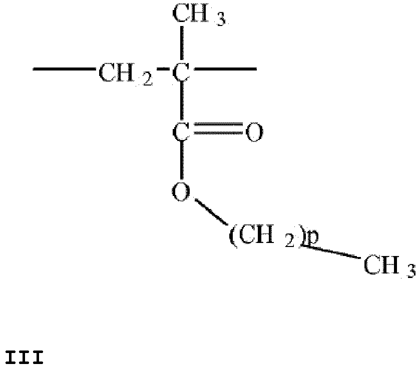 R étant un groupe alkyle C₁ à C₆ ; Rk étant un H ou un groupe alkyle C₁ à C₆ ; m étant un entier de 0 à 2 ; et p étant un entier de 1 à 20.

11. Lentille à cristaux liquides (LC) selon la revendication 1 ou système de lentille à cristaux liquides selon la revendication 7, le monomère photosensible ayant la formule générale M ou **F,** et l'au moins un monomère de méthacrylate d'alkyle étant sélectionné parmi les formules **VA, PL** et **PL1** :

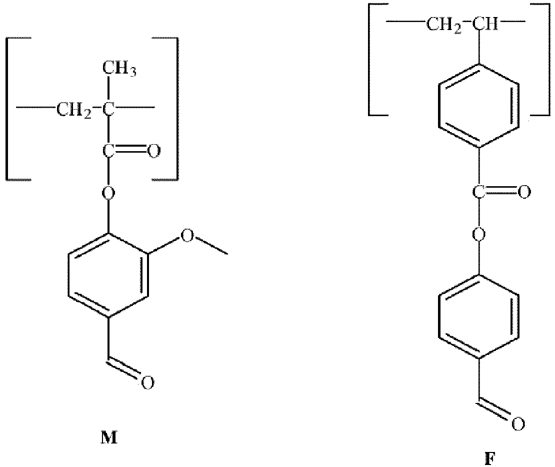

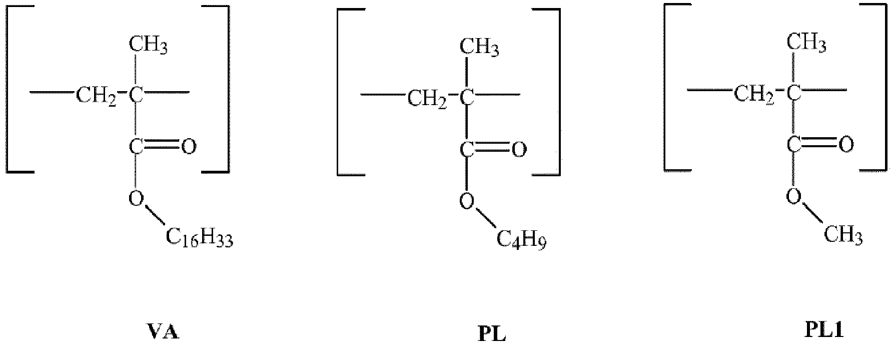

12. Lentille à cristaux liquides (LC) ou système de lentille à cristaux liquides selon la revendication 11, le copolymère étant constitué de **M, VA, PL** et **PL1** ou le copolymère étant constitué de **F, VA, PL** et **PL1.**

13. Lentille à cristaux liquides (LC) ou système de lentille à cristaux liquides selon la revendication 11, le copolymère étant constitué de **M, VA, PL** et **PL1** ; et **M** étant présent à une teneur d'environ 7-17 % mol ; **VA** étant présent à une teneur d'environ 2,5-12,5 % mol ; **PL** étant présent à une teneur d'environ 65,5-75,5 % mol ; et **PL1** étant présent à une teneur d'environ 5-15 % mol.

14. Lentille à cristaux liquides (LC) ou système de lentille à cristaux liquides selon la revendication 11, le copolymère étant constitué de **F, VA, PL** et **PL1** ; et **F** étant présent à une teneur d'environ 0,5-9 % mol ;
**VA** étant présent à une teneur d'environ 3-15,5 % mol ; **PL** étant présent à une teneur d'environ 73-82,5 % mol ; et **PL1** étant présent à une teneur d'environ 5,5-15 % mol.

15. Procédé pour fabriquer une lentille à cristaux liquides (LC), comprenant :
(a) fournir un premier substrat planaire et un deuxième substrat planaire ;
(b) déposer sur une surface du premier substrat planaire une couche d'un premier matériau d'alignement comprenant un copolymère d'un premier monomère photosensible et au moins un monomère de méthacrylate d'alkyle ;
(c) déposer sur une surface du deuxième substrat planaire une couche d'un deuxième matériau d'alignement comprenant un copolymère d'un deuxième monomère photosensible et au moins un monomère de méthacrylate d'alkyle ;
(d) soumettre le premier substrat obtenu à l'étape (b) et le deuxième substrat obtenu à l'étape (c) à un procédé de cuisson lente ;
(e) soumettre les premier et deuxième substrats obtenus à l'étape (d) à un procédé de frottement ;
(f) soumettre les premier et deuxième substrats obtenus à l'étape (e) à une exposition aux UV ;
(g) assembler les premier et deuxième substrats obtenus à l'étape (f) en configuration parallèle de telle sorte que les couches de matériau d'alignement se font face et sont à distance l'une de l'autre,
les premier et deuxième monomères photosensibles ayant des photosensibilités différentes,
et des particules du premier matériau d'alignement ayant un gradient d'angle de pré-inclinaison qui est différent d'un gradient d'angle de pré-inclinaison du deuxième matériau d'alignement.

16. Procédé selon la revendication 15, les matériaux étant dans un solvant aux étapes (b) et (c), et le procédé de cuisson lente enlevant le solvant à l'étape (d).

17. Procédé selon la revendication 15, les directions de frottement sur les deux côtés du substrat étant orthogonales à l'étape (e), et le procédé de frottement induisant un alignement azimutal des particules des matériaux.

18. Procédé selon la revendication 15, une exposition aux UV de gradient étant effectuée simultanément sur deux côtés du substrat à l'étape (f), et l'exposition aux UV induisant un angle de pré-inclinaison dans des particules des matériaux d'alignement.

19. Procédé pour fabriquer un système de lentille à cristaux liquides (LC) accordable électriquement, comprenant :
(a) fournir des premiers substrats planaires et des deuxièmes substrats planaires ;
(b) déposer sur les deux surfaces de chacun des premiers substrats une couche d'un premier matériau d'alignement selon l'une quelconque des revendications 1 à 6, comprenant un copolymère d'un premier monomère photosensible et au moins un monomère de méthacrylate d'alkyle ;
(c) déposer sur les deux surfaces de chacun des deux deuxièmes substrats une couche d'un deuxième matériau d'alignement selon l'une quelconque des revendications 1 à 6, comprenant un copolymère d'un deuxième monomère photosensible et au moins un monomère de méthacrylate d'alkyle ;
(d) soumettre chacun des premiers substrats obtenus à l'étape (b) et chacun des deuxièmes substrats obtenus à l'étape (c) à un procédé de cuisson lente ;
(e) soumettre les premier et deuxième substrats obtenus à l'étape (d) à un procédé de frottement ;
(f) soumettre les premier et deuxième substrats obtenus à l'étape (e) à une exposition aux UV ; et
(g) assembler le premier substrat et le deuxième substrat obtenus à l'étape (f) en configuration parallèle de telle sorte qu'une couche du premier matériau d'alignement et une couche du deuxième matériau d'alignement se font face et sont à distance l'une de l'autre,
les premier et deuxième monomères photosensibles ayant des photosensibilités différentes,
et des particules du premier matériau d'alignement ayant un gradient d'angle de pré-inclinaison qui est différent d'un gradient d'angle de pré-inclinaison du deuxième matériau d'alignement.
